# EUROPEAN PATENT APPLICATION

(11) **EP 3 273 372 A1**
(43) Date of publication of application: **24.01.2018**
(21) Application number: 17182024.4
(22) Date of filing: 19.07.2017
(51) Int. Cl.: G06F 17/50

(54) **MODEL GENERATING METHOD AND APPARATUS**

(30) Priority: 21.07.2016 CN 201610581342
(71) Applicant: Siemens Aktiengesellschaft, 80333 München (DE)
(72) Inventor: WANG, Qi, Wuhan, Hubei 430075 (CN); YUAN, Yong, Beijing, Beijing 102208 (CN); YU, Ming, Wuhan, Hubei 430075 (CN)
(74) Representative: Isarpatent

(57) **Abstract**

An embodiment of the present invention relates to the technical field of production process management, in particular to a model generating method and apparatus, for realizing automatic creation of a system model. A model generating method provided in an embodiment of the present invention comprises: collecting configuration information of a system;
extracting semantic description information from the configuration information; generating a model of the system according to the semantic description information, wherein the model of the system comprises a relationship between model nodes; the model nodes correspond to a device in the system or data produced by a device in the system. By extracting semantic description information from configuration information to generate a system model, a method for realizing automatic creation of a system model is provided, giving higher precision than manual creation of a system model.

## Description

### Technical field

The present invention relates to the technical field of production management, in particular to a model generating method and apparatus.

### Background art

A system such as a factory generally contains hundreds of devices, for example sensors, controllers, materials, components, products, etc. One method which may be chosen to achieve automatic control and processing of devices in a system is to generate a model to describe the system, such that the system becomes structured, and on the basis of the model, subject devices in the system to control and data processing.

At present, models are usually generated manually. Manual generation of a model generally takes a long time, and places considerable demands on the specialist knowledge of the people generating the model; they must have an in-depth understanding of the system, for example: know the meaning of data in the system, system processing logic and relevant parameters, etc. If staff lack specialist knowledge, then it is very difficult to generate a precise model.

### Content of the invention

In view of the above, an embodiment of the present invention provides a model generating method and apparatus, for realizing automatic creation of a system model, wherein the model created is highly precise.

To realize automatic creation of a system model, in an embodiment of the present invention, semantic description information is extracted from system configuration information, then a system model is generated according to the semantic description information.

In a first aspect, an embodiment of the present invention provides a model generating method, which method is used for generating a model of a system, and comprises: collecting configuration information of the system; extracting semantic description information from the configuration information; generating a model of the system according to the semantic description information.

The model of the system comprises at least two model nodes and a relationship between the at least two model nodes; and each of the at least two model nodes corresponds to a device in the system or data produced by a device in the system.

In the method provided in the first aspect, semantic description information is acquired from system configuration information, then a system model is generated according to the semantic description information; thus a method for automatically generating a system model is provided, which gives higher model precision than a method of manually generating a model.

Furthermore, the model generated comprises model nodes and a relationship between model nodes. The model nodes correspond to devices in the system or to data produced by devices in the system. In the past, system models only described devices in a system and a connection relationship between devices, failing to take into account data produced by devices, or the relationships between different items of data produced by devices or between data and devices. However, when a system is operating, there is not only interaction between devices; data produced by devices also contains abundant information in itself, and data produced by one device might have an effect on the operation of another device. Here, not just devices but also data produced by devices are taken into account; not just relationships between devices but also relationships between devices and data, and between items of data, are taken into account. Thus the system model generated is better able to accurately reflect the system operating process and data interaction, and the generated model is more precise.

In the method provided in the first aspect, configuration information of the system may be collected in at least one of the following ways:
collecting configuration information of the system from at least two devices in the system respectively;
collecting configuration information of the system from at least one controller which controls an operating process of at least one device in the system; collecting configuration information of the system from at least one control platform which controls an operating process of at least one device in the system; receiving manually inputted configuration information of the system;
collecting configuration information of the system from at least one auxiliary device, which auxiliary device is used for monitoring an operating state of at least one device in the system and/or for collecting information of at least one device in the system.

In this optional embodiment, configuration information may be collected form various parts of the system, so that the configuration information collected is more comprehensive, and the model generated is more precise.

The system configuration information collected may comprise at least one of the following information:
description information of data produced during operation of at least one device in the system;
description information of at least one device in the system;
process control information for controlling an operating process of at least one device in the system;
information for describing logic for realizing a function of the system.

In this optional embodiment, various types of configuration information may be collected; different items of configuration information describe system configuration from different perspectives, such that the collected information is more diverse, and the generated model is more precise.

In the method provided in the first aspect, optionally, the semantic description information may be extracted from the configuration information according to a keyword in the configuration information.

The keyword is used to indicate at least one of the following relationships:
a portion of description in the configuration information being an attribute of a device in the system;
a portion of description in the configuration information being an attribute of data produced by a device in the system;
a relationship between a device corresponding to a portion of description in the configuration information and another device corresponding to another portion of description;
a relationship between data produced by a device corresponding to a portion of description in the configuration information and other data produced by said device corresponding to another portion of description or data produced by another device;
a relationship between data produced by a device corresponding to a portion of description in the configuration information and said device corresponding to another portion of description or another device.

In this optional embodiment, semantic description information is extracted from the configuration information according to a keyword; thus a solution for extracting semantic description information is provided.

Optionally, in the case where the semantic description information extracted comprises at least two items of information, the following steps may be employed when generating the model of the system according to the semantic description information:
for each item of a portion of or all information of the semantic description information, identifying at least two model nodes associated with said item of information;
generating a sub-model for each item of the portion of or all information, the sub-model comprising at least two model nodes associated with said item of information and/or a relationship between at least two model nodes associated with said item of information;
integrating all the sub-models generated to form a model of the system, according to all model nodes associated with the portion of or all information.

In this optional embodiment, first of all sub-models are generated, then the generated sub-models are integrated to form a system model according to a relationship between model nodes in each sub-model; thus a solution for system model integration is provided.

In the method provided in the first aspect, optionally, after generating a model of the system according to the semantic description information, an adjusted model of the system may also be obtained on the basis of the generated model of the system.

If at least two models of the system are generated according to the semantic description information, then when performing system model adjustment, one of the at least two generated models of the system may be selected to serve as an adjusted model of the system.

If one model of the system is generated according to the semantic description information, then when performing system model adjustment, the generated model of the system may be adjusted, to obtain an adjusted model of the system.

In this optional embodiment, after generating the system model, the model is adjusted; the adjusted model is more precise.

Optionally, an adjusted model of the system is obtained according to real-time data, wherein the real-time data is data produced by at least one device in the system during operation of the system.

In this optional embodiment, a model is adjusted according to real-time data; real-time operation of the system is taken into account, and the adjusted model is more precise.

Optionally, an adjusted model of the system is obtained according to a training rule, wherein the training rule comprises a rule to which a relationship between different types of at least two model nodes of the model conforms.

In this optional embodiment, model adjustment is performed according to a relationship between types of model nodes; thus the relationship between model nodes is taken into account, and a solution for model verification and adjustment is provided.

Optionally, when the model of the system is adjusted according to real-time data, adjustment may be performed in the following way:
first of all, for each of at least two model nodes in the model of the system, performing the following operations:
   acquiring data produced at at least two times respectively during operation of the system by a device in the system corresponding to the model node;
   forming the data produced at the at least two times respectively into a time series according to chronological order;
   determining a time variation trend of variation with time of the time series; then obtaining an adjusted model of the system according to a relationship between the time variation trends corresponding to the at least two model nodes respectively.

In this optional embodiment, a relationship between variation trends of data produced by different model nodes is taken into account, thereby providing a solution for verifying and adjusting a model.

Optionally, after obtaining an adjusted model of the system on the basis of the generated model of the system, the method further comprises: updating the training rule according to the adjusted model of the system.

In this optional embodiment, a training rule is updated according to the adjusted system model, so that when a model is generated again subsequently or a model is adjusted, the model is more precise.

In a second aspect, an embodiment of the present invention provides a model generating apparatus, for generating a model of a system, comprising:
a configuration information collecting module, for collecting configuration information of the system;
a semantic description information extracting module, for extracting semantic description information from the configuration information;
a model generating module, for generating a model of the system according to the semantic description information.

The model of the system comprises at least two model nodes and a relationship between the at least two model nodes; and each of the at least two model nodes corresponds to a device in the system or data produced by a device in the system.

Semantic description information is acquired from system configuration information, then a system model is generated according to the semantic description information; thus a method for automatically generating a system model is provided, which gives higher model precision than a method of manually generating a model.

Furthermore, the model generated comprises model nodes and a relationship between model nodes. The model nodes correspond to devices in the system or to data produced by devices in the system. In the past, system models only described devices in a system and a connection relationship between devices, failing to take into account data produced by devices, or the relationships between different items of data produced by devices or between data and devices. However, when a system is operating, there is not only interaction between devices; data produced by devices also contains abundant information in itself, and data produced by one device might have an effect on the operation of another device. Here, not just devices but also data produced by devices are taken into account; not just relationships between devices but also relationships between devices and data, and between items of data, are taken into account. Thus the system model generated is better able to accurately reflect the system operating process and data interaction, and the generated model is more precise.

Optionally, the configuration information collecting module may collect configuration information of the system in at least one of the following ways: collecting configuration information of the system from at least two devices in the system respectively;
collecting configuration information of the system from at least one controller which controls an operating process of at least one device in the system; collecting configuration information of the system from at least one control platform which controls an operating process of at least one device in the system; receiving manually inputted configuration information of the system; collecting configuration information of the system from at least one auxiliary device, which auxiliary device is used for monitoring an operating state of at least one device in the system and/or for collecting information of at least one device in the system.

In this optional embodiment, configuration information may be collected form various parts of the system, so that the configuration information collected is more comprehensive, and the model generated is more precise.

Optionally, the configuration information comprises at least one of the following information:
description information of data produced during operation of at least one device in the system;
description information of at least one device in the system;
process control information for controlling an operating process of at least one device in the system;
information for describing logic for realizing a function of the system.

In this optional embodiment, various types of configuration information may be collected; different items of configuration information describe system configuration from different perspectives, such that the collected information is more diverse, and the generated model is more precise.

Optionally, the semantic description information extracting module may extract the semantic description information from the configuration information according to a keyword in the configuration information.

The keyword is used to indicate at least one of the following relationships:
a portion of description in the configuration information being an attribute of a device in the system;
a portion of description in the configuration information being an attribute of data produced by a device in the system;
a relationship between a device corresponding to a portion of description in the configuration information and another device corresponding to another portion of description;
a relationship between data produced by a device corresponding to a portion of description in the configuration information and other data produced by said device corresponding to another portion of description or data produced by another device;
a relationship between data produced by a device corresponding to a portion of description in the configuration information and said device corresponding to another portion of description or another device.

In this optional embodiment, semantic description information is extracted from the configuration information according to a keyword; thus a solution for extracting semantic description information is provided.

Optionally, the semantic description information extracted by the semantic description information extracting module comprises at least two items of information; in this case, the model generating module may specifically be used for:
for each item of a portion of or all information of the semantic description information, identifying at least two model nodes associated with said item of information;
generating a sub-model for each item of the portion of or all information, the sub-model comprising at least two model nodes associated with said item of information and/or a relationship between at least two model nodes associated with said item of information;
integrating all the sub-models generated to form a model of the system, according to all model nodes associated with the portion of or all information.

In this optional embodiment, first of all sub-models are generated, then the generated sub-models are integrated to form a system model according to a relationship between model nodes in each sub-model; thus a solution for system model integration is provided.

Optionally, the apparatus further comprises: a model adjusting module, for obtaining an adjusted model of the system on the basis of a model of the system generated by the model generating module.

If the model generating module generates at least two models of the system, then the model adjusting module selects one of the at least two models generated by the model generating module to serve as an adjusted model of the system.

Alternatively, if the model generating module generates one model of the system, then the model adjusting module adjusts the one model generated by the model generating module, to obtain an adjusted model of the system.

In this optional embodiment, after generating the system model, the model is adjusted; the adjusted model is more precise.

Optionally, the model adjusting module may obtain an adjusted model of the system according to real-time data, wherein the real-time data is data produced by at least one device in the system during operation of the system.

In this optional embodiment, a model is adjusted according to real-time data; real-time operation of the system is taken into account, and the adjusted model is more precise.

Optionally, the model adjusting module may obtain an adjusted model of the system according to a training rule, wherein the training rule comprises a rule to which a relationship between different types of at least two model nodes of the model conforms.

In this optional embodiment, model adjustment is performed according to a relationship between types of model nodes; thus the relationship between model nodes is taken into account, and a solution for model verification and adjustment is provided.

Optionally, the model adjusting module may employ the following steps to adjust the model of the system according to real-time data:
first of all, for each of at least two model nodes in the model of the system, performing the following operations:
   acquiring data produced at at least two times respectively during operation of the system by a device in the system corresponding to the model node;
   forming the data produced at the at least two times respectively into a time series according to chronological order;
   determining a time variation trend of variation with time of the time series; then obtaining an adjusted model of the system according to a relationship between the time variation trends corresponding to the at least two model nodes respectively.

In this optional embodiment, a relationship between variation trends of data produced by different model nodes is taken into account, thereby providing a solution for verifying and adjusting a model.

Optionally, the model adjusting module is further used for: after obtaining an adjusted model of the system, updating the training rule according to the adjusted model of the system.

In this optional embodiment, a training rule is updated according to the adjusted system model, so that when a model is generated again subsequently or a model is adjusted, the model is more precise.

In a third aspect, an embodiment of the present invention provides a model generating apparatus, for generating a model of a system, comprising:
a memory, for storing a computer instruction;
a processor, for calling the computer instruction to execute the method provided in any optional embodiment in the first aspect or the second aspect.

Semantic description information is acquired from system configuration information, then a system model is generated according to the semantic description information; thus a method for automatically generating a system model is provided, which gives higher model precision than a method of manually generating a model. Furthermore, the model generated comprises model nodes and a relationship between model nodes. The model nodes correspond to devices in the system or to data produced by devices in the system. In the past, system models only described devices in a system and a connection relationship between devices, failing to take into account data produced by devices, or the relationships between different items of data produced by devices or between data and devices. However, when a system is operating, there is not only interaction between devices; data produced by devices also contains abundant information in itself, and data produced by one device might have an effect on the operation of another device. Here, not just devices but also data produced by devices are taken into account; not just relationships between devices but also relationships between devices and data, and between items of data, are taken into account. Thus the system model generated is better able to accurately reflect the system operating process and data interaction, and the generated model is more precise.

In a fourth aspect, an embodiment of the present invention provides a computer readable medium, on which is stored a computer instruction which, when executed by a processor, causes the processor to execute the method provided in any optional embodiment in the first aspect or the second aspect.

Semantic description information is acquired from system configuration information, then a system model is generated according to the semantic description information; thus a method for automatically generating a system model is provided, which gives higher model precision than a method of manually generating a model. Furthermore, the model generated comprises model nodes and a relationship between model nodes. The model nodes correspond to devices in the system or to data produced by devices in the system. In the past, system models only described devices in a system and a connection relationship between devices, failing to take into account data produced by devices, or the relationships between different items of data produced by devices or between data and devices. However, when a system is operating, there is not only interaction between devices; data produced by devices also contains abundant information in itself, and data produced by one device might have an effect on the operation of another device. Here, not just devices but also data produced by devices are taken into account; not just relationships between devices but also relationships between devices and data, and between items of data, are taken into account. Thus the system model generated is better able to accurately reflect the system operating process and data interaction, and the generated model is more precise.

### Description of the accompanying drawings

Fig. 1 is a flow chart of a model generating method provided in an embodiment of the present invention.
Fig. 2 is a schematic diagram of a system model generated using an embodiment of the present invention.
Fig. 3 is an example of system configuration information.
Fig. 4 is a flow chart of a method provided in an embodiment of the present invention for generating a system model according to semantic description information.
Fig. 5 is a flow chart of another model generating method provided in an embodiment of the present invention.
Fig. 6 is a schematic diagram of a time series in an embodiment of the present invention.
Fig. 7 is a flow chart of another model generating method provided in an embodiment of the present invention.
Fig. 8 is a structural schematic diagram of a model generating apparatus provided in an embodiment of the present invention.
Fig. 9 is a structural schematic diagram of another model generating apparatus provided in an embodiment of the present invention.
Figs. 10 and 11 show examples of a process of generating a system model in an embodiment of the present invention.
Fig. 12 is a structural schematic diagram of another model generating apparatus provided in an embodiment of the present invention.

In the drawings:
S101: collect system configuration information
S102: extract semantic description information
S103: generate system model
201: sensor A 202: sensor B 203: sensor C 204: sensor D
301: data H 302: data I 303: data J 304: data K
305: data L 306: data M 307: data N 308: data O
R1: adjacent R2: father-child R3: before R4: corresponding R5: cause and effect R6: after
U1: Server U2: S7 U3: @LOCALSERVER U4: S7_Connection_1
U5: Consistence (consistency) U6: statepath (state path) U7: blocks U8: db U9: db1 U901: db1.0,b U902: length U903: db1.0,c
S3021: identify model node
S3032: generate sub-model
S3033: integrate system model
S104: obtain adjusted system model
O: output t: time
S105: update training rule
80: model generating apparatus 801: configuration information collecting module 802: semantic description information extracting module
803: model generating module 804: model adjusting module
10: on-site system 20: data point list 30: configuration information from control platform
40: time series 50: configuration information from auxiliary tool 60: initial model
70: adjusted model 90: training rule library
1201: memory 1202: processor

### Particular embodiments

As stated above, a system such as a factory generally contains a huge number of devices of numerous types, e.g. sensors, controllers, materials, components, products, etc. One feasible way of realizing control of these devices of numerous types in the system is to establish a model for describing the system, and on the basis of the system model, subject the devices in the system to control and data processing. However, the question of how to generate a precise model, that is capable of accurately representing the various devices in the system, is a problem which is urgently in need of a solution.

In view of the fact that system configuration information is the basis for operation of devices in the system as well as for cooperation among devices, each device operates strictly in accordance with configuration information. Therefore, in embodiments of the present invention, consideration is given to generation of a system model on the basis of system configuration information.

However, system configuration information can exist in many forms, the contents of which are different from one another. Manual generation of a model takes a long time, and places considerable demands on the specialist knowledge of personnel, and the generated model might not be sufficiently precise. Therefore, an embodiment of the present invention provides a solution in which a system model is generated automatically on the basis of system configuration information. Specifically, semantic description information is extracted from system configuration information, then a system model is generated according to the semantic description information.

A model generating method and apparatus provided in an embodiment of the present invention are explained in detail below with reference to the accompanying drawings.

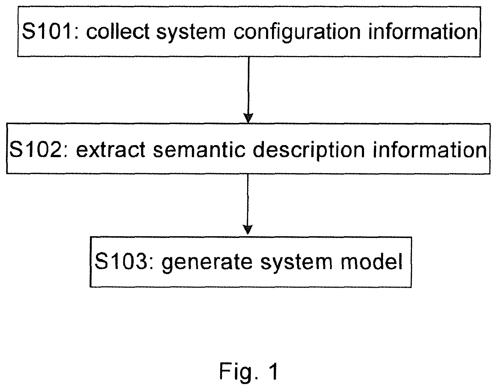

Fig. 1 is a flow chart of a model generating method provided in an embodiment of the present invention. As Fig. 1 shows, the flow comprises the following steps:
S101: collecting configuration information of a system;
S102: extracting semantic description information from the configuration information;
S103: generating a model of the system according to the semantic description information.

In the flow, the extraction of semantic description information from the system configuration information makes use of abundant information used to describe devices, device operating processes and data produced by devices etc. within the system configuration information. The complete nature of the information makes the system model that is generated more precise. Furthermore, through the extraction of semantic description information from configuration information, useful information for generating the system model is acquired, the system model is generated on the basis of the configuration information, and automatic generation of the system model is realized.

System configuration information may include but is not limited to one or more of the following items of information:
information for configuring an attribute of at least one device in the system; information for controlling an operating process of at least one device in the system;
information for configuring data produced during operation of at least one device in the system;
information for configuring a connection relationship between at least two devices in the system;
information for controlling interaction between at least two devices in the system.

Based on these abundant items of system configuration information, abundant semantic description information can be extracted, so that the model generated is better able to reflect the true operating condition of the system, and the model is more precise.

In an embodiment of the present invention, a system model comprises at least two model nodes and a relationship between these at least two model nodes. One model node corresponds to one device in the system or to data produced by one device in the system. In the past, system models only described at least two devices in a system and a connection relationship between at least two devices, failing to take into account data produced by devices, or the relationships between different items of data produced by devices or between data and devices. However, when a system is operating, there is not only interaction between devices; data produced by devices also contains abundant information in itself, and data produced by one device might have an effect on the operation of another device. In embodiments of the present invention, not just devices but also data produced by devices are taken into account; not just relationships between devices but also relationships between devices and data, and between items of data, are taken into account. Thus the system model generated is better able to accurately reflect the system operating process and data interaction, and is therefore more precise.

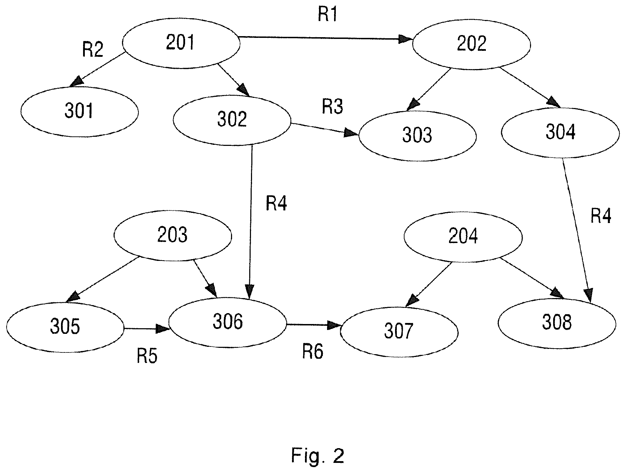

Fig. 2 shows a simple example of a system model in an embodiment of the present invention. Each oval in Fig. 2 represents a model node. The connecting lines between model nodes represent relationships between model nodes. A sensor A 201 and a sensor B 202 have an adjacency relationship; sensor A 201 and data H 301 have a father-child relationship therebetween, indicating that data H 301 is produced by sensor A 201. The relationship between data I 302 and data J 303 is that data I 302 is produced before data J 303. Data I 302 corresponds to data M 306; data K 304 corresponds to data O 308. A sensor C 203 produces data L 305 and data M 306; a sensor D 204 produces data N 307 and data O 308. Data M 306 is produced before data N 307; data L 305 is the reason for the production of data M 306.

Optionally, system configuration information may be collected from different points in the system. For example:
System configuration information is collected from at least two devices in the system.

System configuration information is collected from at least one controller, e.g. a programmable logic controller (PLC), which controls an operating process of at least one device in the system.

System configuration information is collected from at least one control platform which controls an operating process of at least one device in the system; these control platforms may be: a Process Control System (PCS) 7 platform, an Information Technology (IT) system, a control platform using a Human Machine Interface (HMI), a control platform on which PLC programming software STEP7 has been installed, and a control platform using Windows Control Center (WinCC), etc.

The configuration information may also be manually inputted system configuration information.

Furthermore, system configuration information may also be collected from at least one auxiliary device, which auxiliary device is used for monitoring an operating state of at least one device in the system and/or for collecting information of at least one device in the system. For example, a worker holds a scanner and scans a barcode on a material; the scanner can then be regarded as an auxiliary device, while the barcode scanned by the scanner can serve as configuration information. As another example: a Radio Frequency Identification (RFID) reader/writer may monitor relative positions of devices; the RFID reader/writer can then be regarded as an auxiliary device, while the information about relative positions that is obtained by monitoring can serve as configuration information.

In an embodiment of the present invention, the system may comprise devices such as controllers, devices and control platforms which actually operate in the system; therefore, we also refer to the system formed by these devices as an "on-site system". An auxiliary tool may be regarded as a device outside the on-site system, and performs an auxiliary action on system operation.

Configuration information collection positions have been described above; the content which may be contained in configuration information is described below:
Description information of data produced during operation of at least one device in the system. In an embodiment of the present invention, description information of these items of data may form a data point list (data list). Each record in the data point list may comprise a data name and/or identifier, and optionally, may also comprise a simple description of data.

Description information of at least one device in the system, e.g.: information described using Electronic Device Description Language (EDDL); these items of information may be acquired from devices.

Process control information for controlling an operating process of at least one device in a system, e.g. process control information described in a system description file complying with an embedded OLE for Process Control (OPC) Unified Architecture (UA) standard used for connection of a process control object, a tag list from a WinCC control platform, etc.

Information for describing logic for realizing system functions, e.g.: information in Function Input/Output (Function IO) or Standard Template Library (STL) script written using STEP7.

Optionally, in step S102, semantic description information may be extracted from configuration information according to a keyword in the configuration information. The keyword is used to indicate at least one of the following relationships:
a portion of description in the configuration information being an attribute of a device in the system;
a portion of description in the configuration information being an attribute of data produced by a device in the system;
a relationship between a device corresponding to a portion of description in the configuration information and a device corresponding to another portion of description;
a relationship between data produced by a device corresponding to a portion of description in the configuration information and data produced by said device corresponding to another portion of description;
a relationship between data produced by a device corresponding to a portion of description in the configuration information and data produced by another device corresponding to another portion of description;
a relationship between data produced by a device corresponding to a portion of description in the configuration information and said device corresponding to another portion of description;
a relationship between data produced by a device corresponding to a portion of description in the configuration information and another device corresponding to another portion of description.

An input of step S102 is various types of configuration information; the ways in which these are expressed each have their own distinctive features. In this step, optionally, semantic description information in various types of configuration information is extracted, and expressed using a unified semantic language, e.g.: a language complying with the OPC UA or Resource Description Framework (RDF) standard.

Using a unified semantic language for expression facilitates combination of items of semantic description information in step S103, to be analyzed to generate an integrated model.

Some examples of semantic description information generated are given below: Variablel isChildOf Device1 (Variable 1 is Child Of Device 1).

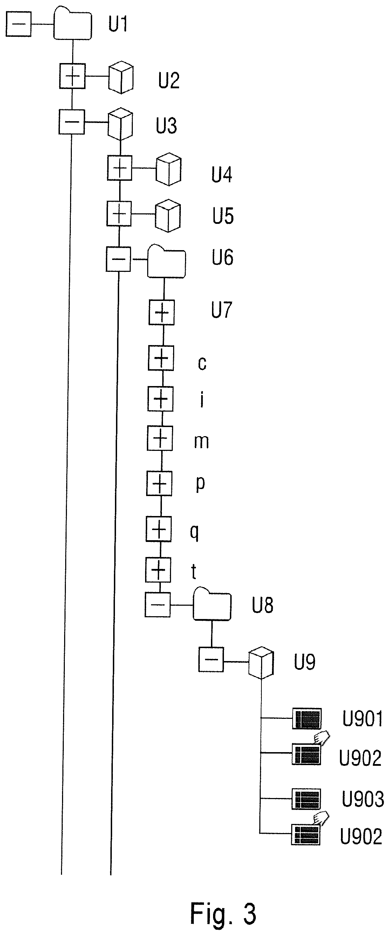

For example, referring to the structure table of an OPC UA server shown in fig. 3, it can be seen that db1.0,b U901 is a child of db1 U9, and db1 U9 is a child of db U8. It must be explained that the structure table of the OPC UA server has been given here in order to facilitate understanding; in fact, such a structure is described by means of a program language complying with the OPC UA standard. There are keywords in a statement used to describe the abovementioned structure table, for indicating that db1.0,b U901 is a child of db1 U9, and db1 U9 is a child of db U8. In step S102, keywords may be extracted from these programs, and a relationship between objects to which the keywords are connected is determined according to the keywords.

Variable2 isRelatedTo Variable3 (Variable 2 is Related To Variable 3).

Again referring to fig. 3, the two variables db1.0,b U901 and db1.0,c U903 are related.

Variable4 isTypeOf Type1 (Variable 4 is Variable of Type 1)
See the EDDL description below:

```
 #define LINEAR 0
 VARIABLE trans1_temperature_unit
 {
   LABEL [digital_units];
   HELP [temperature_unit_help];
   CLASS CONTAINED
   HANDLING READ & WRITE
   TYPE ENUMERATED(2)
  {
   DEFAULT VALUE 32,
   {32, [degC], [degC_help]},
   {33, [degF], [degF_help]},
   {34, [degR], [degR_help]},
   {35, [Kelvin], [Kelvin_help]},
   IF (trans1_sensor_type = LINEAR)
   {
     { 36, [mV], [mV_help] },
     { 37, [Ohm], [Ohm] },
     { 39, [mA], [mA_help] },
    }
   }
 }
```

In this EDDL description, general words and translations have been used with reference to a text dictionary, and a condition description is used to define read/write processing of e.g. a value range, general survey and any other parameter.

On the basis of a keyword CLASS in EDDL, it can be determined that: a variable trans1_temperature_unit is of an ENUMERATED type.

### Device2 isTypeOf Type2 (Type Of Device 2 is Type 2).

Variable5 isInputOf Function1 (Variable 5 is Input Of Function 1); Variable6 isOutputOf Function1 (Variable 6 is Output of Function 1).

See the inputs/outputs of function blocks from STEP7 shown in table 1 below:

**Table 1**

| Hierarchy | Chart | Block | I/O name | Value | Unit | Signal | Identifier |
|---|---|---|---|---|---|---|---|
| Plant\Unit_A\Function(1)\ | TEST | Accumulate | EN | 1 | | | |
| Plant\Unit_A\Function(1)\ | TEST | Accumulate | ADDEND | | | TEST_ADD added | |
| Plant\Unit_A\Function(1)\ | TEST | Accumulate | SUM | | | TEST_ADD sum | |
| Plant\Unit_A\Function(1)\ | TEST | Accumulate | ENO | 0 | | | |
| Plant\Unit_A\Function(1)\ | TEST | Light | EN | 1 | | | |
| Plant\Unit_A\Function(1)\ | TEST | Light | IN1 | | | LIGHT_SWITCH_DOWN | |
| Plant\Unit_A\Function(1)\ | TEST | Light | IN2 | | | LIGHT_SWITCH_UP | |
| Plant\Unit_A\Function(1)\ | TEST | Light | ENO | 0 | | | |
| Plant\Unit_A\Function(1)\ | TEST | Light | OUT1 | 0 | | LIGHT_CONTROL | |

With regard to the variable LIGHT_SWITCH_DOWN in Signals, it can be determined on the basis of the corresponding IN1 in the I/O names that this variable is an input signal of the Block Light; by the same principle, it can be determined that the signal LIGHT_CONTROL is an output signal of the Block Light.

Furthermore, an adjacency relationship between devices can also be determined on the basis of configuration information collected by an auxiliary device (e.g. an RFID reader/writer) . This adjacency relationship may be described as: Device3 isNearBy Device4 (Device 3 is adjacent to Device 4).

For example: device 3 and device 4 each have an RFID electronic tag adhered thereto, and an RFID reader/writer reads wireless signals emitted by the electronic tags of these two devices; it can be determined that the devices are adjacent according to the strength and angle of wireless signals received.

As another example, device 3 and device 4 each have a QR code tag adhered thereto; a mobile phone having a Global Positioning System (GPS) locating function and a QR code scanning function is used to scan the QR code tags on the two devices separately, to learn identity information of the two devices, and GPS position information is recorded at the time of scanning. It can be determined that the two devices are adjacent on the basis of the device identity information and GPS position information acquired.

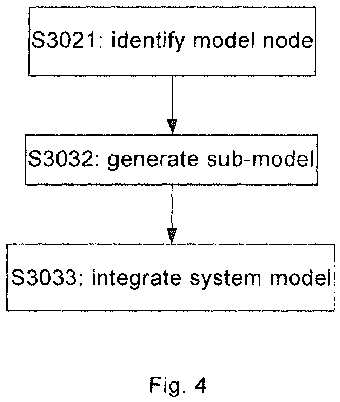

If the semantic description information extracted in step S302 comprises at least two items of information, then as shown in fig. 4, the following sub-steps may be used in step S303 to generate the system model:
S3021: for each item of a portion of or all semantic description information, identifying a model node associated with said item of information;
S3032: generating a sub-model for each item of a portion of or all information, the sub-model comprising at least two model nodes associated with said item of information and/or a relationship between at least two model nodes associated with said item of information;
S3033 : integrating all the sub-models generated to form a system model, according to all identified model nodes associated with a portion of or all information.

In step S3033, sub-models may be integrated to form a system model according to identical model nodes in all sub-models generated.

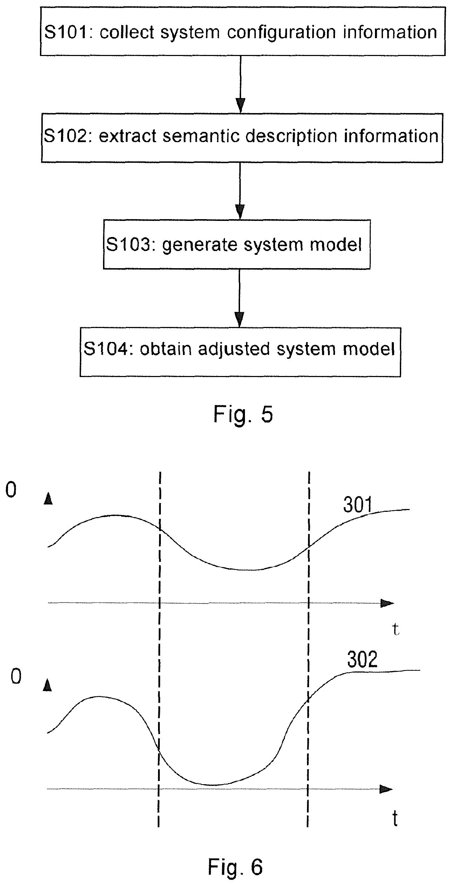

Optionally, as Fig. 5 shows, after step S103, the method further comprises: step S104: obtaining an adjusted system model on the basis of the system model generated in step S103.

In step S103, at least two models of the system might be generated according to semantic description information; then in step S104, one model may be selected from the at least two models of the system that are generated, to serve as the adjusted system model.

Alternatively, in step S103, one model of one system having a portion of undetermined model nodes is generated, and in step S104, the undetermined model nodes are determined through adjustment. Since the undetermined model nodes may have more than one possible implementation, different implementations may also be regarded as different system models.

Alternatively, in step S103, one model of the system is generated according to semantic description information; then in step S104, the system model generated in step S103 is adjusted to obtain the adjusted system model.

Specifically, the adjusted system model may be obtained according to real-time data; or the adjusted system model may be obtained according to a training rule; or the adjusted system model may be obtained according to real-time data and according to a training rule.

The real-time data is: data produced by at least one device in the system during operation of the system. The training rule comprises: a rule to which a relationship between different types of at least two model nodes of the model conforms.

Some examples of training rules are given below:
Tag1 isChildOf Tag2 on possibility 80% (the possibility of tag 1 being a child of tag 2 is 80%).
Tag3 isNearBy Tag4 on possibility 70% (the possibility of tag 3 being adjacent to tag 4 is 70%).
Tag5 isCauseBy Tag6 on possibility 90% (the possibility of tag 5 being caused by tag 6 is 90%).
Tag7 isRelatedTo Tag8 on possibility 85% (the possibility of tag 7 being related to tag 8 is 85%).

For example: a temperature sensor corresponds to one class of model node, a humidity sensor corresponds to another class of model node, and temperature corresponds to another class of model node. The model node corresponding to temperature might be a child of the model node corresponding to the temperature sensor, but will not be a child of the model node corresponding to the humidity sensor.

In the abovementioned training rules, the tags are model nodes. The training rules may be stored in a training rule library; training rules may be extracted from trained models, and re-used in other processes of generating models. Based on existing semantic technology, a tag of an identifier, name or title may be extracted and classified. Reference relationships between tags may be counted, and inputted into rules in the form of possibilities. These rules may serve as a reference for other model generation processes. This is beneficial for the rapid generation of models in the same field or similar fields.

Optionally, the following method may be used to adjust a system model according to real-time data:
for each of at least two model nodes in the system model, performing the following operations:
   acquiring data produced at at least two times respectively during system operation by a device in the system corresponding to the model node;
   forming the data produced at at least two times respectively into a data time series according to chronological order;
   determining a trend of variation with time of the time series;
   obtaining an adjusted system model according to a relationship between trends of variation with time of time series corresponding to the at least two model nodes respectively.

A relationship between items of data may be determined on the basis of an existing method such as data analysis. For example: a data analysis method is used to identify data 1 as varying with data 2. Referring to fig. 6, a time series graph of data 1 may be obtained on the basis of data of collected data 1; a time series graph of data 2 may be obtained on the basis of data of collected data 2. By comparing the two time series graphs, it is determined that data 1 varies in a manner which follows close behind the variation of data 2. Based on the relationship between time series corresponding to obtained data 1 and data 2 respectively, the relationship between model nodes in the system model can be verified, and it is also possible to add the relationship between model nodes in the generated model, to enrich the model.

One possible manner of implementation is as follows: a model is adjusted both according to a training rule and according to real-time data. Optionally, step S104 may comprise the following sub-steps:
according to a training rule, and on the basis of multiple system models generated in step S103, calculating a possibility of each model;
analyzing a data time series according to collected real-time data, to detect a relationship between items of data;
wherein the execution of the two sub-steps mentioned above has no set order; it is possible to perform the first sub-step first, and then perform the second sub-step, or to perform the second sub-step first, and then perform the first sub-step, or to perform both sub-steps at the same time.

Furthermore, also included are the following sub-steps:
determining which model has the highest possibility with reference to real-time data;
adjusting a model according to an analysis result, removing an impossible part, and adding a part which might be missing;
obtaining an adjusted system model.

Since a time series occurs continuously, the model will be adjusted according to an analysis result if the relationship between items of data changes.

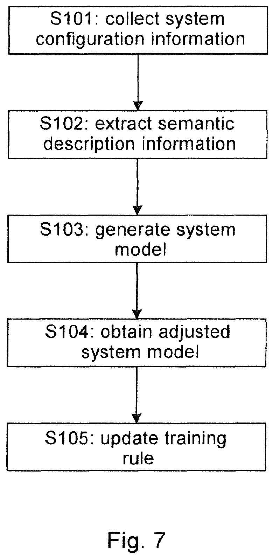

Optionally, referring to Fig. 7, after step S104, the method may further comprise: step S105: updating a training rule according to an adjusted system model. The updated training rule may be stored in a training rule library.

In the flows shown in figs. 5 and 7, the adjustment of a system model according to real-time data and/or a training rule can make the system model more precise.

In an embodiment of the present invention, a generated system model may help to develop a greater number of valuable applications, e.g.: error diagnosis, process monitoring or process simulation, etc.

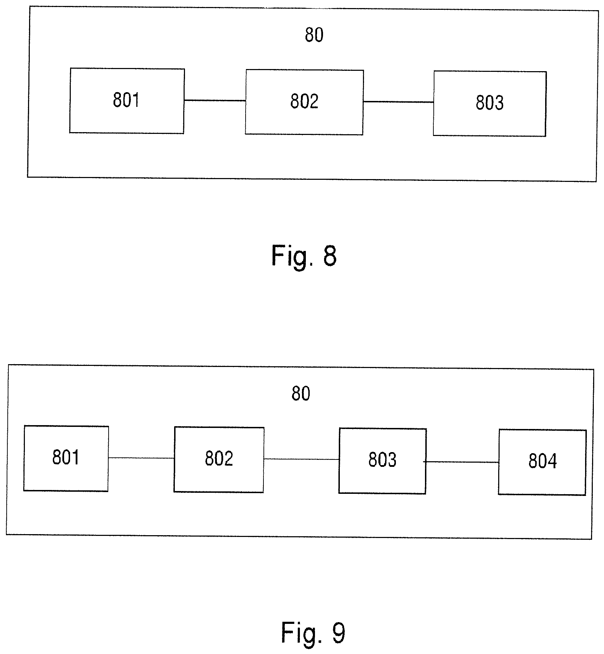

Referring to fig. 8, an embodiment of the present invention also provides a model generating apparatus 80, comprising:
a configuration information collecting module 801, for collecting configuration information of a system; the configuration information being used to configure an attribute of a device in the system, an operating process of a device, data produced during operation of a device, a connection relationship between devices, and interaction between devices;
a semantic description information extracting module 802, for extracting semantic description information from configuration information;
a model generating module 803, for generating a system model according to semantic description information;
wherein the system model comprises at least two model nodes and a relationship between the at least two model nodes;
each model node corresponds to one device in the system or to data produced by one device in the system.

Optionally, the configuration information collecting module 801 is specifically used for collecting system configuration information in at least one of the following ways:
collecting system configuration information from at least two devices in the system;
collecting system configuration information from at least one controller which controls an operating process of at least one device in the system; collecting system configuration information from at least one control platform which controls an operating process of at least one device in the system; receiving manually inputted system configuration information;
collecting system configuration information from at least one auxiliary device, which auxiliary device is used for monitoring an operating state of at least one device in the system and/or for collecting information of at least one device in the system.

Optionally, the configuration information comprises at least one of the following information:
description information of data produced during operation of at least one device in the system;
description information of at least one device in the system;
process control information for controlling an operating process of at least one device in the system;
information for describing logic for realizing system functions.

Optionally, the semantic description information extracting module 802 is specifically used for: extracting semantic description information from configuration information according to a keyword in the configuration information; wherein the keyword can indicate at least one of the following relationships:
a portion of description in the configuration information being an attribute of a device in the system;
a portion of description in the configuration information being an attribute of data produced by a device in the system;
a relationship between a device corresponding to a portion of description in the configuration information and another device corresponding to another portion of description;
a relationship between data produced by a device corresponding to a portion of description in the configuration information and data produced by said device corresponding to another portion of description;
a relationship between data produced by a device corresponding to a portion of description in the configuration information and data produced by another device corresponding to another portion of description;
a relationship between data produced by a device corresponding to a portion of description in the configuration information and said device corresponding to another portion of description;
a relationship between data produced by a device corresponding to a portion of description in the configuration information and another device corresponding to another portion of description.

Optionally, semantic description information extracted by the semantic description information extracting module 802 comprises at least two items of information; and the model generating module is specifically used for:
for each item of a portion of or all semantic description information, identifying at least two model nodes associated with said item of information;
generating a sub-model for each item of a portion of or all information, the sub-model comprising the identified at least two model nodes associated with said item of information and/or a relationship between the identified at least two model nodes associated with said item of information;
integrating all the sub-models generated to form a system model, according to all identified model nodes associated with a portion of or all information.

Optionally, as fig. 9 shows, the apparatus also comprises: a model adjusting module 804, for obtaining an adjusted system model on the basis of a system model generated by the model generating module 803;
wherein the model generating module 803 generates at least two models of the system; and the model adjusting module 804 is specifically used for: selecting one of the at least two models generated by the model generating module 803 to serve as the adjusted system model; or
the model generating module 803 generates one model of the system; and the model adjusting module 804 is specifically used for: adjusting the one model generated by the model generating module, to obtain the adjusted system model.

Optionally, the model adjusting module 804 is specifically used for: obtaining an adjusted system model according to real-time data; and/or obtaining an adjusted system model according to a training rule;
wherein the real-time data is: data produced by at least one device in the system during operation of the system;
the training rule comprises: a rule to which a relationship between different types of at least two model nodes of the model conforms.

Optionally, the model adjusting module 804, when adjusting the system model according to real-time data, is specifically used for:
for each of at least two model nodes in the system model, performing the following operations:
   acquiring data produced at at least two times respectively during system operation by a device in the system corresponding to the model node;
   forming the data produced at at least two times respectively into a data time series according to chronological order;
   determining a trend of variation with time of the time series;
   obtaining an adjusted system model according to a relationship between trends of variation with time of time series corresponding to the at least two model nodes respectively.

Optionally, the model adjusting module 804 is also used for:
after obtaining an adjusted system model, updating a training rule according to the adjusted system model.

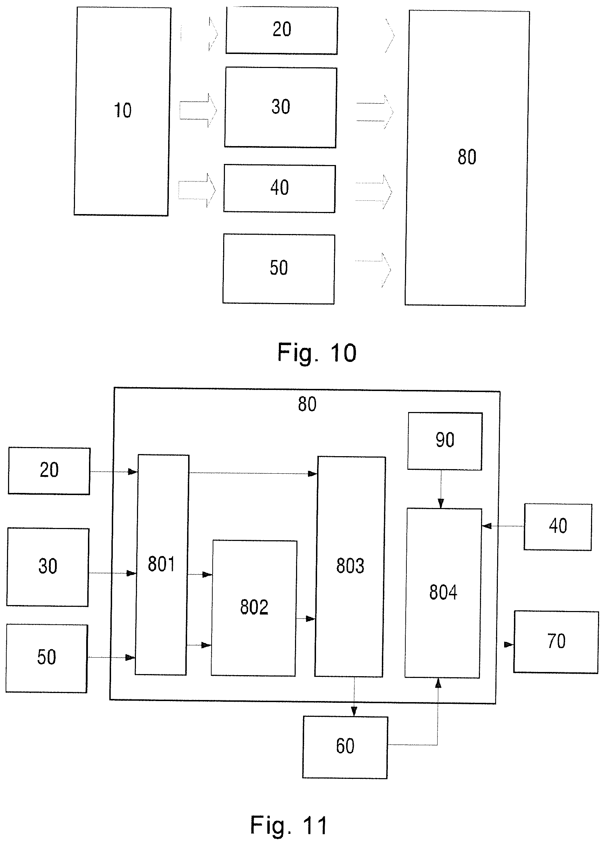

Referring to figs. 10 and 11, examples are given below to explain how the model generating apparatus provided in an embodiment of the present invention is implemented.

Referring to fig. 10, a data point list 20 from an on-site system and configuration information 30 from a control platform (e.g. description, structure, script, etc.) are inputted into a model generating apparatus 80 provided in an embodiment of the present invention. In addition, optionally, configuration information 50 from an auxiliary tool may also be inputted. These items of confirmation information are processed by the model generating apparatus 80, to generate a system model. Here, a time series 40 is real-time data collected during system operation, and as an input to the model generating apparatus 80, can realize verification and updating of a model generated by the model generating apparatus.

Referring to fig. 11, fig. 11 shows not only information exchange between the model generating apparatus 80 and the outside world, but also one possible manner of implementation within the model generating apparatus 80.

As Fig. 11 shows, the configuration information collecting module 801 collects various types of configuration information. The semantic description information extracting module 802 extracts semantic description information from the collected configuration information 50 from the auxiliary tool and the configuration information 30 from the control platform, for the model generating module 803 to generate an initial model 60. When generating the initial model 60, the model generating module 803 also makes use of the data point list 20 collected by the configuration information collecting module 801; data points in the data point list 20 respectively correspond to model nodes in a model, and are used to integrate generated sub-models to form a system model. Based on a training rule in a training rule library 90 and the time series 40 formed by collected real-time data, the model adjusting module 804 subjects the initial model to training and adjustment to form an adjusted model 70, also called a "trained model"; furthermore, the model adjusting module 804 may also update training rules according to the adjusted model 70, and store these in the training rule library 90. The training rule library 90 may be integrated in the model generating apparatus 80, or separately stored in a storage device.

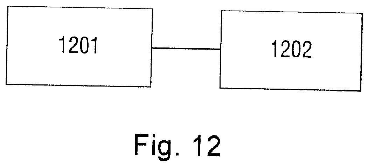

Furthermore, as shown in fig. 12, an embodiment of the present invention provides another model generating apparatus 80, comprising:
a memory 1201, for storing a computer instruction;
a processor 1202, for calling a computer instruction to execute the model generating method provided in an embodiment of the present invention.

An embodiment of the present invention also provides a computer storage medium, storing an instruction for causing a machine to execute a checking method for a program code according to the present text. Specifically, a system or apparatus equipped with a storage medium may be provided; software program code realizing functions of any one of the embodiments above is stored on the storage medium, and a computer (or CPU or MPU) of the system or apparatus is caused to read and execute program code stored in the storage medium.

In such a situation, program code read from a storage medium can itself realize functions of any one of the embodiments above, hence the program code and the storage medium storing the program code form part of the present invention.

Examples of storage media used for providing program code include floppy disks, hard disks, magneto-optical disks, optical disks (such as CD-ROM, CD-R, CD-RW, DVD-ROM, DVD-RAM, DVD-RW, DVD+RW), magnetic tapes, non-volatile memory cards and ROM. Optionally, program code may be downloaded from a server computer via a communication network.

Furthermore, it should be clear that an operating system operating on a computer can be made to complete a portion of or all actual operations, not only through execution of program code read by a computer, but also by means of instructions based on program code, so as to realize functions of any one of the embodiments above.

In addition, it can be appreciated that program code read out from the storage medium is written into a memory installed in an expansion board inserted in the computer, or written into a memory installed in an expansion unit connected to the computer, and thereafter instructions based on the program code make a CPU etc. installed on the expansion board or expansion unit execute part or all of an actual operation, so as to realize the function of any one of the embodiments above.

In summary, in an embodiment of the present invention, semantic description information is acquired from system configuration information, then a system model is generated according to the semantic description information; a method for automatically generating a system model is provided. Compared with a method for manually generating a model, the model precision is higher.

Furthermore, the model generated in an embodiment of the present invention comprises model nodes and a relationship between model nodes. The model nodes correspond to devices in the system or to data produced by devices in the system. In the past, system models only described devices in a system and a connection relationship between devices, failing to take into account data produced by devices, or the relationships between different items of data produced by devices or between data and devices. However, when a system is operating, there is not only interaction between devices; data produced by devices also contains abundant information in itself, and data produced by one device might have an effect on the operation of another device. In embodiments of the present invention, not just devices but also data produced by devices are taken into account; not just relationships between devices but also relationships between devices and data, and between items of data, are taken into account. Thus the system model generated is better able to accurately reflect the system operating process and data interaction, and the generated model is more precise.

It must be explained that not all of the steps and modules in the flows and system structure diagrams above are necessary; certain steps or modules may be omitted according to actual requirements. The order in which steps are executed is not fixed, but may be adjusted as required. The system structures described in the embodiments above may be physical structures, and may also be logical structures, i.e. some modules might be realized by the same physical entity, or some modules might be realized by multiple physical entities, or realized jointly by certain components in multiple independent devices.

In the embodiments above, a hardware unit may be realized in a mechanical or an electrical manner. For example, a hardware unit may comprise a permanent dedicated circuit or logic (e.g. a special processor, FPGA or ASIC) to complete a corresponding operation. A hardware unit may also comprise programmable logic or circuitry (e.g. a universal processor or another programmable processor), and may be set temporarily by software to complete a corresponding operation. Particular embodiments (mechanical, or dedicated permanent circuitry, or temporarily set circuitry) may be determined on the basis of considerations of cost and time.

The present invention has been displayed and explained in detail above by means of the accompanying drawings and preferred embodiments, but the present invention is not limited to these disclosed embodiments. Based on the embodiments described above, those skilled in the art will know that further embodiments of the present invention, also falling within the scope of protection of the present invention, could be obtained by combining code checking means in different embodiments above.

### FURTHER EMBODIMENTS

1. A model generating method, being used to generate a model of a system, and comprising:
   collecting configuration information of the system;
   extracting semantic description information from the configuration information;
   generating a model of the system according to the semantic description information, wherein
   the model of the system comprises at least two model nodes and a relationship between the at least two model nodes, wherein
   each of the at least two model nodes corresponds to a device in the system or data produced by a device in the system.
2. The method as claimed in embodiment 1, wherein the step of collecting configuration information of the system comprises collecting configuration information of the system in at least one of the following ways:
   collecting configuration information of the system from at least two devices in the system respectively;
   collecting configuration information of the system from at least one controller which controls an operating process of at least one device in the system;
   collecting configuration information of the system from at least one control platform which controls an operating process of at least one device in the system;
   receiving manually inputted configuration information of the system;
   collecting configuration information of the system from at least one auxiliary device, which auxiliary device is used for monitoring an operating state of at least one device in the system and/or for collecting information of at least one device in the system.
3. The method as claimed in embodiment 1 or 2, wherein the configuration information comprises at least one of the following information:
   description information of data produced during operation of at least one device in the system;
   description information of at least one device in the system;
   process control information for controlling an operating process of at least one device in the system;
   information for describing logic for realizing a function of the system.
4. The method as claimed in any one of embodiments 1 - 3, wherein the step of extracting semantic description information from the configuration information comprises:
   extracting the semantic description information from the configuration information according to a keyword in the configuration information, wherein
   the keyword is used to indicate at least one of the following relationships:
      a portion of description in the configuration information being an attribute of a device in the system;
      a portion of description in the configuration information being an attribute of data produced by a device in the system;
      a relationship between a device corresponding to a portion of description in the configuration information and another device corresponding to another portion of description;
      a relationship between data produced by a device corresponding to a portion of description in the configuration information and other data produced by said device corresponding to another portion of description or data produced by another device;
      a relationship between data produced by a device corresponding to a portion of description in the configuration information and said device corresponding to another portion of description or another device.
5. The method as claimed in any one of embodiments 1 - 4, wherein semantic description information of the system comprises at least two items of information, and the step of generating a model of the system according to the semantic description information comprises:
   for each item of a portion of or all information of the semantic description information, identifying at least two model nodes associated with said item of information;
   generating a sub-model for each item of the portion of or all information, the sub-model comprising at least two model nodes associated with said item of information and/or a relationship between at least two model nodes associated with said item of information;
   integrating all the sub-models generated to form a model of the system, according to all model nodes associated with the portion of or all information.
6. The method as claimed in any one of embodiments 1 - 5, further comprising, after generating a model of the system according to the semantic description information, obtaining an adjusted model of the system on the basis of the generated model of the system; wherein
   the step of generating a model of the system according to the semantic description information comprises:
   generating at least two models of the system according to the semantic description information, and
   the step of obtaining an adjusted model of the system on the basis of the generated model of the system comprises: selecting one of the at least two generated models of the system to serve as an adjusted model of the system;
      or
   the step of generating a model of the system according to the semantic description information comprises:
      generating one model of the system according to the semantic description information, and
      the step of obtaining an adjusted model of the system on the basis of the generated model of the system comprises: adjusting the generated model of the system, to obtain an adjusted model of the system.
7. The method as claimed in embodiment 6, wherein the step of obtaining an adjusted model of the system on the basis of the generated model of the system comprises:
   obtaining an adjusted model of the system according to real-time data; wherein
   the real-time data is data produced by at least one device in the system during operation of the system;
      and/or
   obtaining an adjusted model of the system according to a training rule; wherein
   the training rule comprises a rule to which a relationship between different types of at least two model nodes of the model conforms.
8. The method as claimed in embodiment 7, wherein the step of adjusting the model of the system according to real-time data comprises:
   for each of at least two model nodes in the model of the system, performing the following operations:
      acquiring data produced at at least two times respectively during operation of the system by a device in the system corresponding to the model node;
      forming the data produced at the at least two times respectively into a time series according to chronological order;
      determining a time variation trend of variation with time of the time series;
      obtaining an adjusted model of the system according to a relationship between the time variation trends corresponding to the at least two model nodes respectively.
9. The method as claimed in embodiment 7 or 8, further comprising, after obtaining an adjusted model of the system on the basis of the generated model of the system: updating the training rule according to the adjusted model of the system.
10. A model generating apparatus (80), being used to generate a model of a system, and comprising:
   a configuration information collecting module (801), for collecting configuration information of the system;
   a semantic description information extracting module (802), for extracting semantic description information from the configuration information;
   a model generating module (803), for generating a model of the system according to the semantic description information, wherein
   the model of the system comprises at least two model nodes and a relationship between the at least two model nodes, wherein
   each of the at least two model nodes corresponds to a device in the system or data produced by a device in the system.
11. The apparatus as claimed in embodiment 10, wherein the configuration information collecting module (801) is specifically used for collecting configuration information of the system in at least one of the following ways:
   collecting configuration information of the system from at least two devices in the system respectively;
   collecting configuration information of the system from at least one controller which controls an operating process of at least one device in the system; collecting configuration information of the system from at least one control platform which controls an operating process of at least one device in the system; receiving manually inputted configuration information of the system;
   collecting configuration information of the system from at least one auxiliary device, which auxiliary device is used for monitoring an operating state of at least one device in the system and/or for collecting information of at least one device in the system.
12. The apparatus as claimed in embodiment 10 or 11, wherein the configuration information comprises at least one of the following information:
   description information of data produced during operation of at least one device in the system;
   description information of at least one device in the system;
   process control information for controlling an operating process of at least one device in the system;
   information for describing logic for realizing a function of the system.
13. The apparatus as claimed in any one of embodiments 10 - 12, wherein the semantic description information extracting module (802) is specifically used for extracting the semantic description information from the configuration information according to a keyword in the configuration information, wherein the keyword is used to indicate at least one of the following relationships: a portion of description in the configuration information being an attribute of a device in the system;
   a portion of description in the configuration information being an attribute of data produced by a device in the system;
   a relationship between a device corresponding to a portion of description in the configuration information and another device corresponding to another portion of description;
   a relationship between data produced by a device corresponding to a portion of description in the configuration information and other data produced by said device corresponding to another portion of description or data produced by another device;
   a relationship between data produced by a device corresponding to a portion of description in the configuration information and said device corresponding to another portion of description or another device.
14. The apparatus as claimed in any one of embodiments 10 - 13, wherein the semantic description information extracted by the semantic description information extracting module (802) comprises at least two items of information, and the model generating module (803) is specifically used for:
   for each item of a portion of or all information of the semantic description information, identifying at least two model nodes associated with said item of information;
   generating a sub-model for each item of the portion of or all information, the sub-model comprising at least two model nodes associated with said item of information and/or a relationship between at least two model nodes associated with said item of information;
   integrating all the sub-models generated to form a model of the system, according to all model nodes associated with the portion of or all information.
15. The apparatus as claimed in any one of embodiments 10 - 14, further comprising: a model adjusting module (804), for obtaining an adjusted model of the system on the basis of a model of the system generated by the model generating module (803), wherein
   the model generating module (803) generates at least two models of the system, and
   the model adjusting module (804) is specifically used for selecting one of the at least two models generated by the model generating module (803) to serve as an adjusted model of the system;
   or
   the model generating module (803) generates one model of the system, and the model adjusting module (804) is specifically used for adjusting the one model generated by the model generating module (803), to obtain an adjusted model of the system.
16. The apparatus as claimed in embodiment 15, wherein the model adjusting module (804) is specifically used for:
   obtaining an adjusted model of the system according to real-time data, wherein the real-time data is data produced by at least one device in the system during operation of the system;
      and/or
   obtaining an adjusted model of the system according to a training rule, wherein the training rule comprises a rule to which a relationship between different types of at least two model nodes of the model conforms.
17. The apparatus as claimed in embodiment 16, wherein the model adjusting module (804), when adjusting a model of the system according to real-time data, is specifically used for:
   for each of at least two model nodes in the model of the system, performing the following operations:
      acquiring data produced at at least two times respectively during operation of the system by a device in the system corresponding to the model node;
      forming the data produced at the at least two times respectively into a time series according to chronological order;
      determining a time variation trend of variation with time of the time series; obtaining an adjusted model of the system according to a relationship between the time variation trends corresponding to the at least two model nodes respectively.
18. The apparatus as claimed in embodiment 16 or 17, wherein the model adjusting module (804) is further used for:
   after obtaining an adjusted model of the system, updating the training rule according to the adjusted model of the system.
19. A model generating apparatus (80), being used to generate a model of a system, and comprising:
   a memory (1201), for storing a computer instruction;
   a processor (1202), for calling the computer instruction to execute the method as claimed in any one of embodiments 1 - 9.
20. A computer readable medium, on which is stored a computer instruction which, when executed by a processor (1202), causes the processor (1202) to execute the method as claimed in any one of embodiments 1 - 9.

## Claims

1. A model generating method, being used to generate a model of a system, and comprising:
collecting configuration information of the system;
extracting semantic description information from the configuration information;
generating a model of the system according to the semantic description information, wherein
the model of the system comprises at least two model nodes and a relationship between the at least two model nodes, wherein
each of the at least two model nodes corresponds to a device in the system or data produced by a device in the system.

2. The method as claimed in claim 1, wherein the step of collecting configuration information of the system comprises collecting configuration information of the system in at least one of the following ways:
collecting configuration information of the system from at least two devices in the system respectively;
collecting configuration information of the system from at least one controller which controls an operating process of at least one device in the system;
collecting configuration information of the system from at least one control platform which controls an operating process of at least one device in the system;
receiving manually inputted configuration information of the system;
collecting configuration information of the system from at least one auxiliary device, which auxiliary device is used for monitoring an operating state of at least one device in the system and/or for collecting information of at least one device in the system.

3. The method as claimed in claim 1 or 2, wherein the configuration information comprises at least one of the following information:
description information of data produced during operation of at least one device in the system;
description information of at least one device in the system;
process control information for controlling an operating process of at least one device in the system;
information for describing logic for realizing a function of the system.

4. The method as claimed in any one of claims 1 - 3, wherein the step of extracting semantic description information from the configuration information comprises:
extracting the semantic description information from the configuration information according to a keyword in the configuration information, wherein
the keyword is used to indicate at least one of the following relationships:
a portion of description in the configuration information being an attribute of a device in the system;
a portion of description in the configuration information being an attribute of data produced by a device in the system;
a relationship between a device corresponding to a portion of description in the configuration information and another device corresponding to another portion of description;
a relationship between data produced by a device corresponding to a portion of description in the configuration information and other data produced by said device corresponding to another portion of description or data produced by another device;
a relationship between data produced by a device corresponding to a portion of description in the configuration information and said device corresponding to another portion of description or another device.

5. The method as claimed in any one of claims 1 - 4, wherein semantic description information of the system comprises at least two items of information, and the step of generating a model of the system according to the semantic description information comprises:
for each item of a portion of or all information of the semantic description information, identifying at least two model nodes associated with said item of information;
generating a sub-model for each item of the portion of or all information, the sub-model comprising at least two model nodes associated with said item of information and/or a relationship between at least two model nodes associated with said item of information;
integrating all the sub-models generated to form a model of the system, according to all model nodes associated with the portion of or all information.

6. The method as claimed in any one of claims 1 - 5, further comprising, after generating a model of the system according to the semantic description information, obtaining an adjusted model of the system on the basis of the generated model of the system; wherein
the step of generating a model of the system according to the semantic description information comprises:
generating at least two models of the system according to the semantic description information, and
the step of obtaining an adjusted model of the system on the basis of the generated model of the system comprises: selecting one of the at least two generated models of the system to serve as an adjusted model of the system;
or
the step of generating a model of the system according to the semantic description information comprises:
generating one model of the system according to the semantic description information, and
the step of obtaining an adjusted model of the system on the basis of the generated model of the system comprises: adjusting the generated model of the system, to obtain an adjusted model of the system.

7. The method as claimed in claim 6, wherein the step of obtaining an adjusted model of the system on the basis of the generated model of the system comprises:
obtaining an adjusted model of the system according to real-time data; wherein the real-time data is data produced by at least one device in the system during operation of the system;
and/or
obtaining an adjusted model of the system according to a training rule; wherein
the training rule comprises a rule to which a relationship between different types of at least two model nodes of the model conforms.

8. The method as claimed in claim 7, wherein the step of adjusting the model of the system according to real-time data comprises:
for each of at least two model nodes in the model of the system, performing the following operations:
acquiring data produced at at least two times respectively during operation of the system by a device in the system corresponding to the model node;
forming the data produced at the at least two times respectively into a time series according to chronological order;
determining a time variation trend of variation with time of the time series;
obtaining an adjusted model of the system according to a relationship between the time variation trends corresponding to the at least two model nodes respectively.

9. The method as claimed in claim 7 or 8, further comprising, after obtaining an adjusted model of the system on the basis of the generated model of the system: updating the training rule according to the adjusted model of the system.

10. A model generating apparatus (80), in particular configured to execute a method according to any of the claims 1-9, being used to generate a model of a system, and comprising:
a configuration information collecting module (801), for collecting configuration information of the system;
a semantic description information extracting module (802), for extracting semantic description information from the configuration information;
a model generating module (803), for generating a model of the system according to the semantic description information, wherein
the model of the system comprises at least two model nodes and a relationship between the at least two model nodes, wherein
each of the at least two model nodes corresponds to a device in the system or data produced by a device in the system.

11. The apparatus of claim 10, further comprising:
a model adjusting module (804), for obtaining an adjusted model of the system on the basis of a model of the system generated by the model generating module (803), wherein
the model generating module (803) generates at least two models of the system,
and
the model adjusting module (804) is specifically used for selecting one of the at least two models generated by the model generating module (803) to serve as an adjusted model of the system;
or
the model generating module (803) generates one model of the system, and the model adjusting module (804) is specifically used for adjusting the one model generated by the model generating module (803), to obtain an adjusted model of the system.

12. The model generating apparatus (80) of any of the claims 10 or 11, wherein the apparatus, being used to generate a model of a system, and comprising:
a memory (1201), for storing a computer instruction;
a processor (1202), for calling the computer instruction to execute the method as claimed in any one of claims 1 - 9.

13. A computer readable medium, on which is stored a computer instruction which, when executed by a processor (1202), causes the processor (1202) to execute the method as claimed in any one of claims 1 - 9.
